# DEMANDE DE BREVET EUROPEEN

(11) **EP 2 263 785 A1**
(43) Date de publication de la demande: **22.12.2010**
(21) Numéro de dépôt: 10356017.3
(22) Date de dépôt: 27.05.2010
(51) Int. Cl.: B01F 7/08, B29B 7/42, B29B 7/48, B29C 47/38, B01J 19/20

(54) **Métactivateur**

(30) Priorité: 18.06.2009 FR 0902958
(71) Demandeur: Mercurhone, Sarl, 69004 Lyon (FR)
(72) Inventeur: Yi, Beom-Jun, 69300 Caluire et Cuire (FR)

(57) **Abrégé**

L'invention concerne une machine, composée de plusieurs compartiments dans lesquels des traitements en série sont appliqués par compression rotative individuelle puis par micro auto-explosion. Le traitement en série, nommé métactivation, est constitué d'abord, d'un micro-craquage mécanique tous azimuts puis d'une désagrégation de la masse, et, aboutit à la transformation de la masse en taille plus réduite et la modification physico-chimique et énergétique au sein du matériau d'origine.

La machine et le procédé sont employés notamment sur des granulats de caoutchoucs vulcanisés, comme les pneus usagés afin de produire un nouveau genre de caoutchouc en poudre fine, dit métastable, qui se comporte comme du mélange vierge, ayant la faculté d'auto-adhésion et de re-vuicanisation. De plus, ce caoutchouc montre une capacité d'adhésion omnipotente aux autres polymères, PE, PP, PA, etc.

## Description

La présente invention concerne l'appareil ou la machine, qui traite des granulats de taille 0,5 - 5 mm d'élastomères ou polymères vulcanisés, composé d'un cylindre ou fourreau à une ou plusieurs pièces dans lesquels des vis rotatives, coniques ou droites, sont montées, composées, elles aussi, d'un ou plusieurs éléments.

Le corps de la machine est constitué ainsi d'une ou plusieurs parties ou compartiments montés en chaîne les uns à la suite des autres et, entre ces compartiments, des écluses à rainures latérales sont placées au niveau de la vis.

Les configurations mécaniques de chaque compartiment, y compris les diamètres de chaque cylindre, vis, écluse, sont différentes et indépendantes les unes des autres afin de permettre l'application aux matériaux de conditions variables et optimales de traitement en série jusqu'à la sortie de la machine.

Au cours de leur passage dans un compartiment, les matériaux subissent d'abord une compression rotative individuelle et, ensuite, une micro auto - explosion, surtout, à la sortie de l'écluse.

Suite à ces traitements consécutifs, en passant par les multiples compartiments et écluses de différentes formes, les matériaux introduits sous forme de granulats de 0,5 - 5 mm sont transformés en particules fines ou en poudres en moyenne plus petites que les granulats d'entrée.

Ces particules séparées ou légèrement attachées au granulat ou à la masse d'origine, dont la taille varie du millimètre ou micron mètre, présentent une propriété spécifique et une surface particulière avec des grains plus ou moins ronds tels les grains de l'intérieur d'un fruit de grenade.

Ce procédé mécanique est nommé par l'auteur la "Métactivation", d'où vient le nom de la machine "Métactivateur". Le produit sortant de ce procédé est lui nommé commercialement le "caoutchouc métastable" ou le "caoutchouc métactivé", qui se distingue du caoutchouc vierge ou du caoutchouc vulcanisé sur plusieurs aspects scientifiques et industriels, qui est l'objet d'un autre brevet sous le titre de "Matériau Polymérique Métastable en Poudre".

Ces particules produites présentent des propriétés physico - chimiques distinctes du matériau d'origine. Par exemple, les caoutchoucs vulcanisés qui à l'origine ne se collent pas, deviennent re-vulcanisables, montrant un phénomène d'auto-adhésion, et se coagulent, même sans liants, sous forme moulée. Ceci est un phénomène nouveau dans la science et l'industrie des polymères.

D'un point de vue fonctionnel, l'opération de la machine ressemble aux broyeurs, granulateurs, pulvérisateurs, micronisateurs, ou extrudeuses à mono-vis, etc. - mais, sa configuration mécanique, les conditions du procédé et le résultat de traitement sont différents des machines existantes.

Les figures annexées illustrent l'invention :
La figure 1 représente un schéma général du principe avec des compartiments 1, 2, 3, 4, etc. - séparés par des écluses 5
La figure 2 représente l'exemple d'un plan de vis conique dont le bout se termine par une écluse 1
La figure 3 représente l'état de la surface d'une particule avec des grains fins 1 et ronds 2 après le traitement

Les caractéristiques de la machine ou l'appareil sont comme suit :

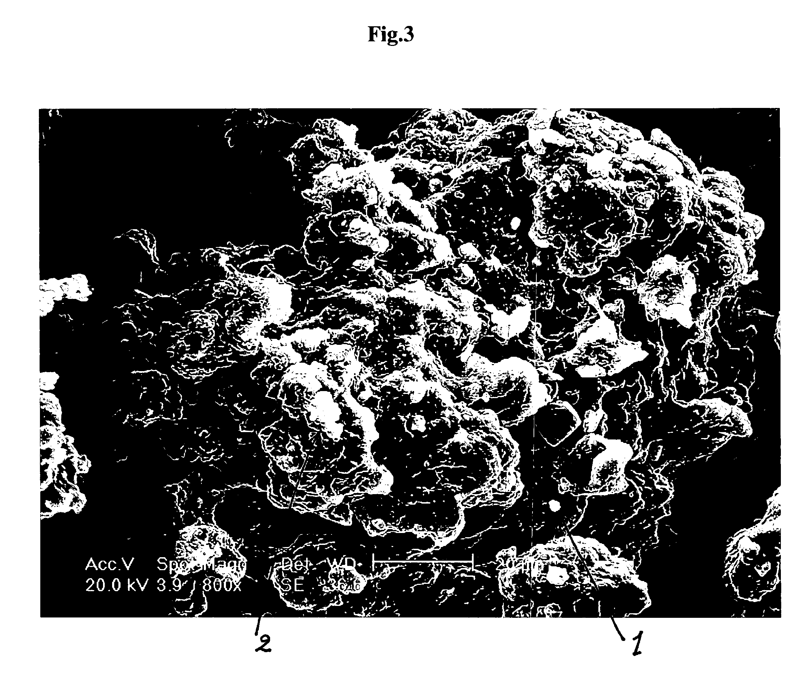

Selon la fig. 1, à l'extérieur, une ou plusieurs pièces du cylindre ou fourreau. A l'intérieur, une vis rotative composée de multiples éléments, coniques ou droits, est montée, comme dans une extrudeuse à moteur. Le corps de la machine composé par le cylindre, la vis et l'écluse, est divisé en plusieurs parties ou compartiments 1, 2, 3, 4, etc.- par des écluses 5.

Chaque compartiment est constitué par le cylindre, la vis et l'écluse de taille, diamètre, de longueurs et formes divers, mais, spécifiques aux matériaux et objectifs recherchés.

La vitesse de rotation de la vis varie de 10 à 300 tours par minute.

Le taux de cisaillement varie de 1.000 à 10. 000 sec⁻¹.

Le taux de compression de chaque compartiment varie de 2 à 10 fois : le Taux Compression = hauteur du début de vis/hauteur au niveau d'écluse (entrefer)

La hauteur des entrefers, l'espace entre l'intérieur du cylindre et l'extérieur de l'écluse, varie de 0,1 à 3 mm suivant les compartiments. La largeur de ces fentes se réduit progressivement de la première écluse à la dernière écluse : par exemple, 3 mm pour la première écluse et 1,5 mm pour la 2ème, 0,6 mm pour la 3ème, etc. -

Le taux de micro auto-explosion de la machine varie de 1,01 - 1,40 suivant les types d'élastomères ou polymères vulcanisés. Ce taux est exprimé par le rapport entre le volume massique du matériau d'entrée et celui de sortie. Par exemple, dans le cas où le volume massique, mesuré en pycnomètre, des granulats de pneus usagés à 3mm (matériau d'entrée de la machine) est 848 cm³/kg, et, celui de la poudre de pneus usagés produits par la machine ( matériau de sortie ) est 956 cm³/kg, le taux de micro auto-explosion de la machine pour ce matériau est 1,127 ( 956 divisé par 848 donne un rapport de 1,127).

La température de chaque compartiment est réglable indépendamment des compartiments voisins grâce aux dispositifs d'échauffement et refroidissement installés autour du cylindre et à l'intérieur de la vis. Des liquides de refroidissement circulent dans des canaux de refroidissement, afin de maintenir les températures optimales tout au long de la vis et du cylindre, elles varient de 30°C à 150°C.

Les surfaces de l'intérieur du cylindre, de l'extérieur de la vis et de l'extérieur des écluses sont lisses et/ ou rugueuses et traitées afin d'augmenter la résistance thermique et l'anti-abrasion.

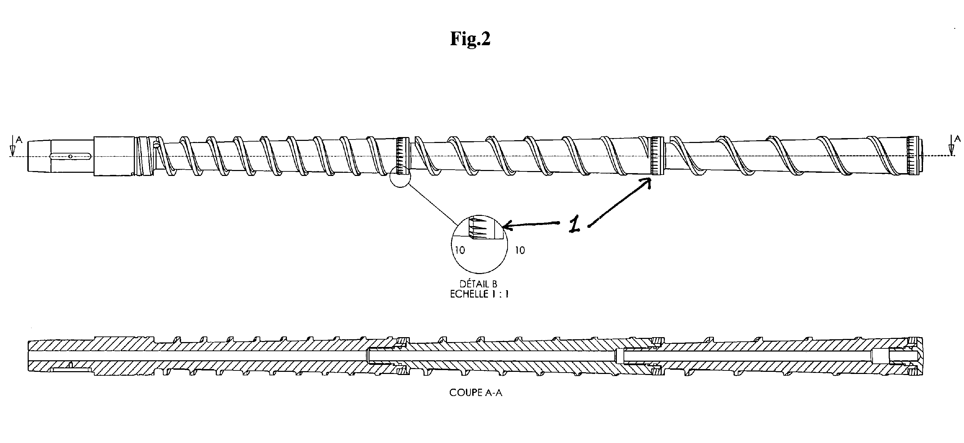

Un exemple de formes spécifiques des écluses est présenté dans la fig. 2, avec ces rainures latérales progressivement de moins en moins profondes vers le centre de l'entrefer. Ces rainures sont configurées afin d'introduire dans la rainure individuellement chaque granulat, celui-ci arrive au début de l'écluse à l'état compressé, et de l'entraîner jusqu'au centre des écluses. Au niveau du centre de l'entrefer. Le granulat est pris par l'entrefer effectif de l'écluse pour continuer à subir la compression rotative. En fin de course, dans l'entrefer, le granulat compressé rencontre brutalement un espace de décompression ou de libération où une sorte de micro expansion instantanée ou de micro auto-explosion se produit alors. Etant donné que le traitement individuel de chaque granulat est une condition prépondérante pour une meilleure efficacité de cette opération, l'écluse est conçue afin d'obtenir l'insertion au maximum individualisée de chaque granulat.

Les taux de compression et d'auto-explosion sont les facteurs principaux de la machine. Par exemple, les granulats de polymères très durs avec une contrainte à la rupture en MPa élevée, comme ceux des pneus usagés, doivent être traités sous des taux très élevés avec une vis spécifique telle que présentée dans la fig. 2, alors que pour un caoutchouc souple, la machine avec la configuration de vis et d'écluse telle que présentée dans la fig. 1, est suffisante pour obtenir ces taux indispensables.

Le principe et le mécanisme du procédé sont les suivants :

Dans chaque compartiment, une série de traitements à basse température, nommé la métactivation, est appliquée : la compression lente et progressive par la vis, la compression individuellement appliquée sur des granulats et accélérée dès l'entrée de l'écluse, la compression rotative accentuée par l'entrefer entre le cylindre et l'écluse, et finalement une micro auto-explosion à la sortie de l'écluse.

En fonction du nombre de compartiments et des conditions créées à basse température dans chacun d'entre eux, le matériau, par exemple des granulats à 3 mm de pneus usagés introduits dans la machine, subit à plusieurs reprises d'abord, la compression rotative individuelle puis la micro auto-explosion en passant par plusieurs compartiments jusqu'à la sortie de la même machine.

En premier lieu, pendant la compression rotative individuelle, un micro - craquage mécanique tous azimuts de la masse ou granulat se produit, puis à la sortie de l'écluse, grâce à la décompression ou libération volumétrique brutale, autrement dit à une sorte d'expansion instantanée ou une auto-explosion, une sorte de désagrégation de la masse est provoquée. Par conséquent, un granulat de 3 mm se casse ou se divise ou encore se désagrège en plus petites particules ou en poudre.

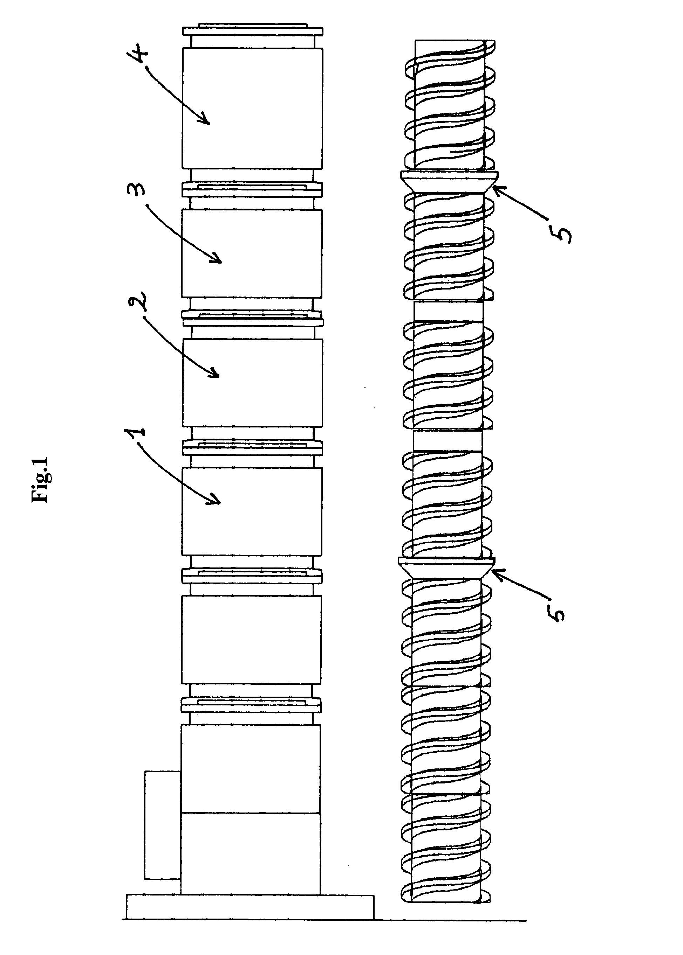

Ce phénomène de désagrégation par la micro auto-explosion se constate sur la photo de MEB (Microscope Electronique à Balayage) au niveau de la surface des particules : selon la fig. 3, la surface de la nouvelle particule est formée par des micro grains plus ou moins ronds comme des raisins. Cette morphologie montre que la surface n'a pas été coupée par une sorte de couteau ou détachée par un étirement, mais est plutôt à un état librement explosé de l'intérieur de la masse par une force expansible ou libératrice, qui engendre la forme la plus logique dans la nature, c'est à dire une forme plus ou moins sphérique à une surface minimum, telle une goutte d'eau.

Ainsi, ces micro grains plus ou moins sphériques, irrégulièrement répandus sur toute la surface de la particule prouvent que les composants ou les micro - structures formés par la vulcanisation d'origine de la masse, sont désagrégés ou auto-explosés, sans ajout de substances étrangères, par une décompression brutale.

Les conditions générales de traitement appliquées dans chaque compartiment de la machine sont optimisées suivant l'art technique: l'état de la surface du cylindre, de la vis et de l'écluse, la forme des rainures sur l'écluse, la hauteur d'entrefer, le nombre de tour de vis, etc. - sont aussi des facteurs importants même si les variables essentielles sont bien le taux de compression, le taux d'auto - explosion et la température.

Le résultat du traitement est comme suit :

D'après des mesures scientifiques, ce traitement a pour résultat une transformation structurelle et énergétique ayant eu lieu à l'intérieur de la masse, semblable à du granulat de pneus usagés et plus généralement, des granulats de caoutchouc vulcanisé. Au sein de la nouvelle particule ainsi produite, la taille et la masse volumique sont diminuées, la surface spécifique BET et le volume massique sont augmentés, la capacité calorique est fortement augmentée, ainsi qu'une structure expansée en volume est réalisée, une réaction exothermique est constatée, la structure des liaisons moléculaire et atomiques sont fondamentalement modifiées, etc. --- par rapport aux granulats d'origine. Ces nouvelles particules se trouvent dans un état thermodynamiquement métastable à relativement long terme, entre l'état stable du caoutchouc vulcanisé et l'état instable du caoutchouc vierge.

Ce changement des propriétés physiques, chimiques, atomiques et énergétiques donne aux caoutchoucs vulcanisés une nouvelle faculté importante au niveau de leur ré-utilisation, car transformés par la machine en poudre de taille plus petite que l'origine, le nouveau matériau montre une capacité d'adhésion omnipotente aux autres polymères, élastomères, polyéthylène, polypropylène, polyamides, etc.-

Un exemple de résultat de ce traitement est comme suit :

Les granulats solides et élastiques de caoutchouc vulcanisé, par exemple des granulats de pneus usagés d'une taille de 3 mm, sont traités par le métactivateur de l'invention. La photo du MEB sur la fig. 3 montre que la désagrégation par micro auto-explosion a bien eu lieu, au vu des grains fins 1 et ronds 2 de la taille du micron mètre, restés attachés ou séparés à la masse d'origine.

En somme, par la machine et le procédé, une série de traitements, la métactivation, est appliquée de façon à provoquer deux phénomènes physiques au sein d'un granulat: d'abord, le micro-craquage mécanique tous azimuts de la masse par compression rotative individuelle, et ensuite la désagrégation de la masse par micro auto-explosion, afin de produire l'élastomère ou polymère spécifique en poudre activée, le caoutchouc métastable ou métactivé.

La machine et le principe du procédé peuvent être appliqués non seulement aux élastomères ou polymères vulcanisés, comme les pneus usagés ou plastiques vulcanisés, mais aussi aux morceaux, granules ou particules solides ou semi-solides de matières organiques, ou à des minéraux comme des céramiques, des ciments, des gypses, des céréales, des graines de plante, du bois, etc.

## Revendications

1. Appareil ou la machine, qui traite des granulats de taille 0.5 - 5 mm d'élastomères ou polymères vulcanisés, composé d'un cylindre ou fourreau à une ou plusieurs pièces dans lesquels des vis rotatives, coniques ou droites, sont montées, composées, elles aussi, d'un ou plusieurs éléments.

2. Appareil ou la machine selon la revendication 1, dont le corps de la machine est constitué d'une ou plusieurs parties ou compartiments montés en chaîne les uns à la suite des autres et, entre ces compartiments, des écluses à rainures latérales sont placées au niveau de la vis.

3. Appareil ou la machine selon la revendication 2, dont
- la vitesse de rotation de la vis varie de 10 à 300 tours par minute,
- le taux de compression de chaque compartiment varie de 2 à 10 fois,
- la hauteur des entrefers, l'espace entre l'intérieur du cylindre et l'extérieur de l'écluse, varie de 0,1 à 3 mm suivant les compartiments,
- les températures optimales tout au long de la vis et du cylindre varient de 30°C à 150°C.

4. Procédé selon la revendication 3, dont le taux de micro auto-explosion de la machine varie de 1,01 - 1,40 suivant les types d'élastomères ou polymères vulcanisés.

5. Procédé selon la revendication 4, suivant lequel une série de traitements, la métactivation, est appliquée de façon à provoquer deux phénomènes physiques au sein d'un granulat: d'abord, le micro-craquage mécanique tous azimuts de la masse par compression rotative individuelle, et ensuite, la désagrégation de la masse par micro auto-explosion, afin de produire l'élastomère ou polymère spécifique en poudre activée, le caoutchouc métastable ou métactivé.

## Revendications modifiées

### Revendications modifiées conformément à la règle 137(2) CBE.

**1.** Procédé et dispositif qui traitent des déchets de caoutchoucs ou polymères vulcanisés, par exemple des granulats de taille 0,5 - 5 mm de pneus usagés, par d'une part, le dispositif composé d'un cylindre/fourreau à une ou plusieurs pièces ou compartiments (1) dans lesquels plusieurs écluses (2) spécialement conçues pour faciliter l'insertion des granulats, grâce à des rainures (3) latérales en partie antérieure, sont arrangées ou fixées sur des vis rotatives, coniques ou droites, elles aussi, composées d'un ou plusieurs éléments, par d'autre part, le procédé consistant en trois opérations mécaniques à température basse : l'opération compressive par des vis rotatives, l'opération de cisaillement au niveau de l'écluse, et ensuite, l'opération d'expansion brutale ou une micro auto-explosion à la sortie de l'écluse dans l'espace vide. Ainsi, les procédé et dispositif sus-cités appliquent une série de traitements à basse température, nommé "la métactivation", de façon à provoquer deux phénomènes physiques au sein d'un granulat : d'abord, le micro-craquage tous azimuts de la masse par compression et cisaillement rotatif individuel, et ensuite la désagrégation de la masse par micro auto-explosion, afin de produire des nouveaux mélanges d'élastomère ou de polymère spécifiques en poudre, nommé "le mélange de caoutchouc/polymère métastable ou métactivé".

**2.** Dispositif selon revendication 1, dont
- le taux de compression de chaque compartiment varie de 2 à 10 fois
- le taux de cisaillement de chaque compartiment varie de 1 000 à 10 000 sec⁻¹
- Les entrefers effectifs au niveau de l'écluse, l'espace/fente entre l'intérieur du cylindre ou fourreau et l'extérieur de l'écluse, varie de 0,1 à 3 mm suivant les compartiments (1) dont les largeurs se réduisent progressivement de la première écluse à la dernière écluse.

**3.** Procédé selon revendication 1, dont
- La vitesse de rotation de la vis du dispositif varie de 10 à 300 tours/minute
- les températures varient entre 30°C et 150°C au sein d'un compartiment
- le taux de micro auto-explosion varie de 1,01-1,40 suivant les sortes de mélanges d'élastomères ou polymères vulcanisés.
